# EUROPÄISCHE PATENTANMELDUNG

(11) **EP 1 698 430 A1**
(43) Veröffentlichungstag der Anmeldung: **06.09.2006**
(21) Anmeldenummer: 05004883.4
(22) Anmeldetag: 05.03.2005
(51) Int. Cl.: B23Q 11/00, B08B 5/04, F26B 5/12

(54) **Vorrichtung zum Absaugen von Werkstücken**

(71) Anmelder: EWAB Holding AG c/o Zumida Treuhand AG, 6301 Zug (CH)
(72) Erfinder: Oppermann, Walter, 34346 Hann. Münden (DE)
(74) Vertreter: Rehberg Hüppe + Partner

(57) **Zusammenfassung**

Eine Absaugvorrichtung (3) zum Absaugen von Werkstücken (4) mit einer Außenkontur (7) weist eine Absaugmatrize (5) mit einer Innenkontur (6), die so an die Außenkontur (7) der Werkstücke (4) angepasst ist, dass bei einem im Bereich der Innenkontur (6) der Absaugmatrize (5) angeordneten Werkstück (4) ein Absaugspalt zwischen der Innenkontur (6) der Absaugmatrize (5) und der Außenkontur (7) des Werkstücks (4) verbleibt, und mit einem in ihre Innenkontur 6 einmündenden Absauganschluss (8) zum Absaugen aus dem Absaugspalt und einen Aktuator (18) zum Annähern eines Werkstückträgers (2) an die Absaugmatrize (5), bis ein auf dem Werkstückträger (2) gelagertes Werkstück (4) in der Absaugmatrize (5) angeordnet ist, und zum wieder Entfernen des Werkstückträgers 2 mit dem Werkstück (4) von der Absaugmatrize (5), wobei ein Absaugraum (28) um das Werkstück (4) beim Annähern des Werkzeugträgers (2) an die Absaugmatrize (5) bis auf den Absauganschluss (8) und definiert begrenzte Luftzuführungsöffnungen geschlossen wird, auf. Dabei ist ein gegenüber der Absaugmatrize (5) beweglicher Absaugkragen (10) vorgesehen, der den Absaugraum (28) bis auf den Absauganschluss (8) und begrenzte Luftzuführungsöffnungen verschließt, bevor das Werkstück (4) in dem Bereich der Innenkontor (6) der Absaugmatrize eintritt, und der sich beim weiteren Annähern des Werkstückträgers (2) an die Absaugmatrize (5) gegenüber der Absaugmatrize (5) bewegt.

## Beschreibung

Die Erfindung betrifft eine Vorrichtung zum Absaugen von Werkstücken mit den Merkmalen des Oberbegriffs des Patentanspruchs 1.

Durch das Absaugen der Werkstücke sollen von diesen beispielsweise Schmier- und Kühlmittel, Späne oder Stäube entfernt werden, wie sie häufig von einer vorhergehenden, beispielsweise schleifenden oder spanabnehmenden, Bearbeitung des Werkstücks herrühren. Die abgesaugten Materialien können, insbesondere nach ihrer Trennung entsorgt oder auch für die neuerliche Verwendung als Kühl- oder Schmiermittel zurückgeführt werden.

### STAND DER TECHNIK

Die vorliegende Erfindung geht von einer Vorrichtung zum Absaugen von Werkstücken mit den Merkmalen des Oberbegriffs des Patentanspruchs 1 aus, die ein industriell praktizierter Stand der Technik ist. In der Vorrichtung wird ein Werkstückträger von einer Förderbahn für Werkstückträger mit einem vertikal arbeitenden Aktuator angehoben und an eine Absaugmatrize angenähert. Dabei wird ein auf dem Werkstückträger angeordnetes Werkstück in den Bereich einer Innenkontur der Absaugmatrize eingeführt und die Unterseite der Absaugmatrize wird mit einer Grundplatte des Werkstückträgers soweit erschlossen, dass in vertikaler Richtung nur noch ein begrenzter Luftzuführungsspalt zwischen der Grundplatte des Werkstückträgers und der Absaugmatrize verbleibt. Durch diesen Luftzuführungsspalt strömt Luft flach über die Grundplatte des Werkstückträgers in einen zwischen der Absaugmatrize und dem Werkstückträger definierten Absaugraum ein. Diese Luft strömt dann durch einen Absaugspalt, der im Bereich der Innenkontur der Absaugmatrize zwischen der Absaugmatrize und dem dort angeordneten Werkstück verbleibt, bis in einen Absauganschluss, der in die Innenkontur der Absaugmatrize einmündet und über den der Absaugraum abgesaugt wird. Durch den reduzierten freien Querschnitt des Luftzuführungsspalts und des Absaugspalts weist die hier durchströmende Luft eine hohe Geschwindigkeit auf und damit eine hohe Wahrscheinlichkeit, an der Oberfläche der Grundplatte des Werkstückträgers und der Oberfläche des Werkstücks anhaftende Verunreinigungen bis in den Absauganschluss mitzureißen. Probleme treten jedoch bei gröberen Spänen auf, insbesondere dann, wenn diese Abmessungen von der Größenordnung des Absaugspalts erreichen oder sogar noch gröber sind. Diese groben Späne sind nicht durch den Absaugspalt beweglich und können sich aufgrund ihrer fehlenden Beweglichkeit insbesondere auch nicht aus irgendwelchen Vertiefungen des Werkstücks oder aus dem Bereich irgendwelcher Hinterschneidungen des Werkstücks lösen. Es gelingt auch nicht, diese groben Späne zu entfernen, indem das Werkstück auf dem Werkstückträger nur teilweise in die Absaugmatrize eingeführt wird und dabei bereits durch den Absauganschluss abgesaugt wird, weil die über die dann recht großen freien Querschnitte auftretenden Strömungsgeschwindigkeiten der angesaugten Luft offensichtlich nicht groß genug werden, um selbst gröbere Späne, die eine vergleichsweise große Angriffsfläche aufweisen, mitzureißen.

### AUFGABE DER ERFINDUNG

Der Erfindung liegt die Aufgabe zugrunde, eine Vorrichtung mit den Merkmalen des Oberbegriffs des Patentanspruchs 1 aufzuzeigen, mit der sowohl sehr grobe als auch sehr feine Späne und Stäube sowie selbst viskose Flüssigkeit von der Oberfläche eines Werkstücks und eines für das Werkstück verwandten Werkstückträgers zuverlässig absaugbar sind.

### LÖSUNG

Die Aufgabe der Erfindung wird durch eine Vorrichtung zum Absaugen von Werkstücken mit den Merkmalen des unabhängigen Patentanspruchs 1 gelöst. Bevorzugte Ausführungsformen der neuen Vorrichtung sind in den neuen Unteransprüchen 2 bis 10 beschrieben.

### BESCHREIBUNG DER ERFINDUNG

Bei der neuen Vorrichtung zum Absaugen von Werkstücken ist ein gegenüber der Absaugmatrize beweglicher Absaugkragen vorgesehen, der den Absaugraum bis auf den Absauganschluss und begrenzte Zuführungsöffnungen verschließt, bevor das Werkstück in den Bereich der Innenkontur der Absaugmatrize eintritt, und der sich beim weiteren Annähern des Werkstückträgers an die Absaugmatrize gegenüber der Saugmatrize bewegt. Durch den Absaugkragen wird also bereits dann, wenn das Werkstück noch nicht über den Absaugspalt vergleichsweise eng von der Absaugmatrize eingeschlossen ist, der Absaugraum bereits so geschlossen, so dass die über den Absauganschluss in die Absaugmatrize gelangende Luft nur noch durch die begrenzten Luftzuführungsöffnungen eintreten kann. Aufgrund des verringerten Querschnitts der Luftzuführungsöffnungen weist die hierdurch in den Absaugraum einströmende Luft eine erhöhte Geschwindigkeit auf und ist in der Lage, insbesondere grobe Späne von der Oberfläche des Werkstückträgers und des Werkstücks mitzunehmen und in den Absauganschluss abzufördern. Weil in dem Moment des Schließens des Absaugraums durch den Absaugkragen das Werkstück noch nicht in dem Bereich der Innenkontur der Absaugmatrize angeordnet ist, stehen durch die Absaugmatrize bis zu dem Absauganschluss immer noch große freie Querschnitte zur Verfügung, durch die auch grobe Späne problemlos hindurchgefördert werden können. Erst wenn diese groben Späne von dem Werkstückträger und dem Werkstück entfernt sind, nähert sich der Werkstückträger soweit weiter an die Absaugmatrize an, dass das Werkstück in den Bereich der Innenkontur der Absaugmatrize gelangt, wonach zwischen dieser Innenkontur und der Außenkontur des Werkstücks nur noch der kleine Absaugspalt als freier Querschnitt zur Verfügung steht. Dieser kleine Absaugspalt erhöht zwar die Strömungsgeschwindigkeit an der Oberfläche des Werkstücks weiter, was günstig für das Absaugen feinteiliger und klebrig anhaftender Verunreinigungen von dem Werkstück ist, er stellt aber keinen ausreichenden freien Querschnitt für den Abtransport grober Späne mehr zur Verfügung. Bei der geschilderten weiteren Annäherung des Werkstückträgers an die Absaugmatrize bewegt sich der Absaugkragen der neuen Vorrichtung gegenüber der Absaugmatrize, so dass sich das Volumen des Absaugraums über diese Annäherung verkleinert.

Der Absaugkragen kann den Absaugraum dann bis auf den Absaugraum um begrenzte Luftzuführungsöffnungen verschließen, wenn das Werkstück in einen angetrichterten Eingangsbereich der Absaugmatrize eingetreten ist, in dem zwischen dem Werkstück und der Absaugmatrize ein Vorabsaugspalt verbleibt, der mindestens doppelt so weit ist wie der minimale Absaugspalt zwischen der Innenkontur der Absaugmatrize und der Außenkontur des Werkstücks. Auch dann, wenn der Absaugkragen den Absaugraum schließt, befindet sich das Werkstück somit bereits in einer an seine Außenkontur angepassten Kavität. Allerdings ist der hierin vorliegende Vorabsaugspalt noch größer als im Bereich der Innenkontur der Absaugmatrize. Auf diese Weise bleibt die Strömungsgeschwindigkeit der abgesaugten Luft an der Oberfläche des Werkstücks zwar noch hinter dem Maximalwert zurück, der beispielsweise zum Absaugen anhaftender Viskose auf Flüssigkeiten oder Staub in Öl Emulsionen benötigt wird. Für grobe Späne mit vergleichsweise großer Angriffsfläche reichen die Strömungsgeschwindigkeiten zur Mitnahme aber bereits aus, und die freien Querschnitte in dem Absaugraum sind gleichzeitig ausreichend groß, um diese groben Späne problemlos abzuführen.

Konkret kann der Absaugkragen durch einen Mantel ausgebildet sein, der um die Annäherungsrichtung des Werkstückträgers an die Absaugmatrize umläuft. Es ist zwar beispielsweise auch denkbar, den Absaugkragen in Form eines Faltenbalgs auszubilden, der entgegen der Annäherungsrichtung an die Absaugmatrize angesetzt ist, doch sind glatte Konturen bei der neuen Vorrichtung besonders bevorzugt.

In der bevorzugten konkreten Ausführungsform ist der Absaugkragen formsteif und in der Annäherungsrichtung des Werkstückträgers an die Absaugmatrize gegenüber der Absaugmatrize verschieblich gelagert. Eine solche Anordnung kann auch als gegenüber der Absaugmatrize teleskopierbarer Absaugkragen bezeichnet werden. Die Bewegung des Absaugkragens beim weiteren Annähern des Werkstückträgers an die Absaugmatrize kann von der Bewegung des Werkstückträgers abgenommen werden. So kann der Absaugkragen beim Annähern des Werkstückträgers an die Absaugmatrize von dem Werkstückträger mitgenommen werden. Beim wieder Entfernen des Werkstückträgers von der Absaugmatrize wird der Absaugkragen typischerweise durch den Unterdruck, der in dem Absaugraum herrscht, auch in der entgegengesetzten Richtung wieder von dem Werkstückträger mitgenommen. Er kann aber auch durch Schwerkraft oder auch aktive Mittel in seine Ausgangsposition zurückgeführt werden, sobald sich der Werkstückträger wieder von der Absaugmatrize entfernt.

Der Absaugkragen kann Durchbrechungen aufweisen, um Luftzuführungsöffnungen auszubilden durch die hindurch gezielte Luftströmungen in bestimmte Bereiche des Absaugraums hinein hervorgerufen werden, wenn der Absaugraum durch den Absauganschluss abgesaugt wird. Beispielsweise können so Luftströme gezielt auf Problembereiche bei der Abnahme grober Späne von der Oberfläche des Werkstücks gerichtet werden.

In aller Regel wird die entscheidende Luftzuführungsöffnung durch einen umlaufenden oder mehrere voneinander getrennte Luftzuführungsspalte zwischen dem Absaugkragen und der Oberfläche einer Grundplatte des Werkstückträgers gebildet werden, wobei sich diese Luftzuführungsspalte in der Annäherungsrichtung des Werkstückträgers an die Absaugmatrize erstrecken. Die durch diese Luftzuführungsspalte in den Absaugraum eingesaugte Luft streicht mit hoher Geschwindigkeit flach über die Oberfläche der Grundplatte und reißt dort anhaftende Materialien, die als Verunreinigungen zu entfernen sind, mit. Dies gilt auch für dort aufliegende grobe Späne, die zu Beginn des Absaugens durch den geschlossenen Absaugraum noch problemlos bis zu dem Absauganschluss gelangen können.

Vorzugsweise arbeitet der Aktuator für das Annähern des Werkstückhalters an die Absaugmatrize und das wieder Entfernen des Werkstückhalters von der Absaugmatrize vertikal, wobei er für Werkstückträger vorgesehen sein kann, die auf einer Förderbahn für Werkstückträger in horizontaler Richtung zu der neuen Vorrichtung gelangen. Der Aktuator hebt den jeweiligen Werkstückträger zum Einführen des Werkstücks in die Absaugmatrize gegenüber der Förderbahn vertikal an und setzt ihn beim wieder Entfernen des Werkstückträgers mit dem Werkstück von der Absaugmatrize wieder vertikal auf die Förderbahn ab. Die Förderbahn kann dann den Werkstückträger mit dem abgesaugten Werkstück abfördern und einen neuen Werkstückträger mit Werkstück in die Vorrichtung hineinfördern.

Um sicherzustellen, dass der Aktuator den Werkstückträger beim wieder Entfernen von der Absaugmatrize trotz des in dem Absaugraum herrschenden Unterdrucks zuverlässig wieder mitnimmt, können an dem Aktuator Rückhaltelemente vorgesehen sein, die den Werkstückträgern in Richtung auf die Absaugmatrize hin übergreifen. Vorzugsweise werden diese Rückhalteelemente durch Druckfedern auf den Werkstückträger hin vorgespannt, um nach dem Anheben des Werkstückträgers von der Förderbahn den Werkstückträger durch elastische Kräfte auf ein Auflager an dem Aktuator vorzuspannen. Mit dieser Vorspannung wird dann der Werkstückträger von dem Absaugkragen der neuen Vorrichtung zuverlässig abgezogen. Zudem können die den Werkstückträger übergreifenden Rückhalteelemente so ausgebildet sein, dass sie auch die Höhe des Luftzuführungsspalts zwischen dem Absaugkragen und der Oberfläche der Grundplatte des Werkstückträgers definieren.

Wenn sich die Druckfedern, die zum Vorspannen des Werkstückträgers auf das Auflager des Aktuators dienen, um diesen zuverlässig von dem Absaugkragen wieder abzuziehen, beim wieder Absenken des Werkstückträgers auf die Förderbahn so an der Förderbahn abstützen, dass der Werkstückträger von den elastischen Kräften wieder frei wird, ist ein Austauschen der Werkstückträger unter Zu- und Abführung über die Förderbahn bei der neuen Vorrichtung besonders unproblematisch.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand eines in den Figuren dargestellten bevorzugten Ausführungsbeispiels weiter erläutert und beschrieben.
- Fig. 1: zeigt eine perspektivische Ansicht der neuen Vorrichtung in Verbindung mit einer Förderbahn für Werkstückträger, wobei ein Werkstückträger mit einem Werkstück in seiner untersten Position in der Vorrichtung wiedergegeben ist und wobei die Vorrichtung in einem Vertikalschnitt senkrecht zu der Förderbahn geschnitten dargestellt ist.
- Fig. 2: zeigt eine Draufsicht auf den Vertikalschnitt der Vorrichtung gemäß Fig. 1.
- Fig.3: ist eine Fig. 1 entsprechende Ansicht, in der eine Grundplatte des Werkstückträgers fast bis zum Verschließen eines Absaugraums in Richtung auf eine Absaugmatrize der Vorrichtung angehoben ist.
- Fig. 4: ist eine Fig. 2 entsprechende Draufsicht mit der Stellung des Werkstückträgers gemäß Fig. 3.
- Fig. 5: ist eine den Fig. 1 und 3 entsprechende perspektivische Ansicht, in der die Grundplatte des Werkstückträgers bis an die Absaugmatrize der Vorrichtung angehoben ist; und
- Fig. 6: ist eine den Fig. 2 und 4 entsprechend Draufsicht mit der Stellung des Werkstückträgers gemäß Fig. 5.

### FIGURENBESCHREIBUNG

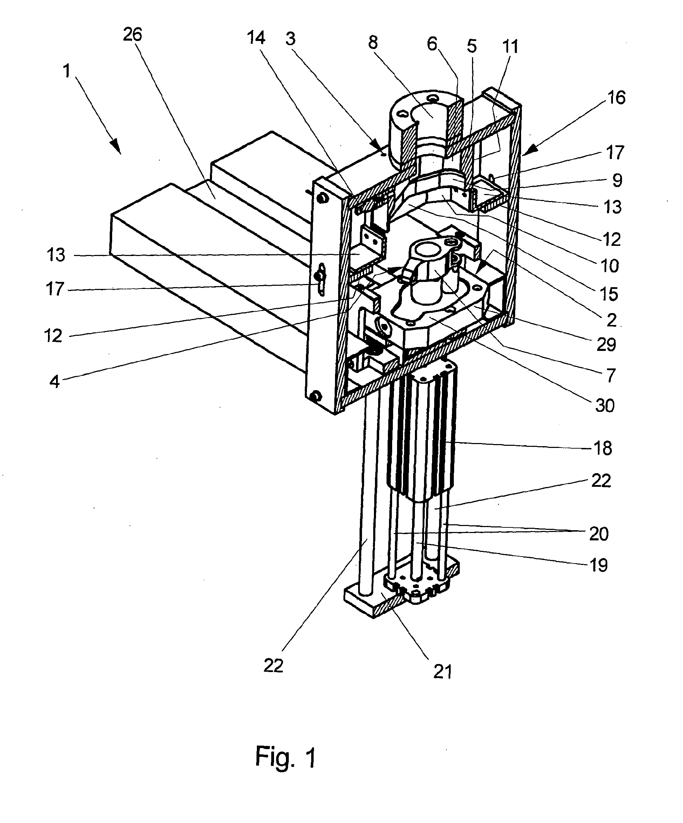

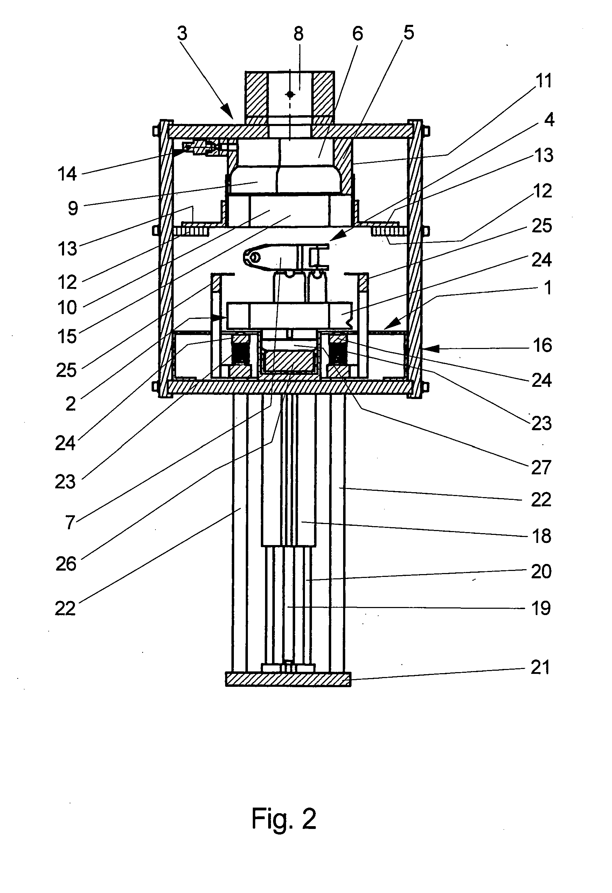

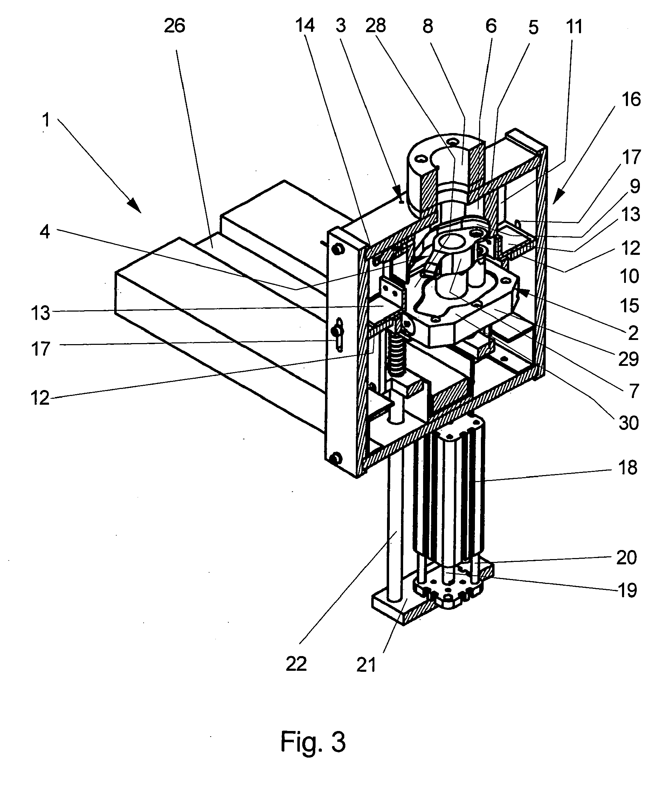

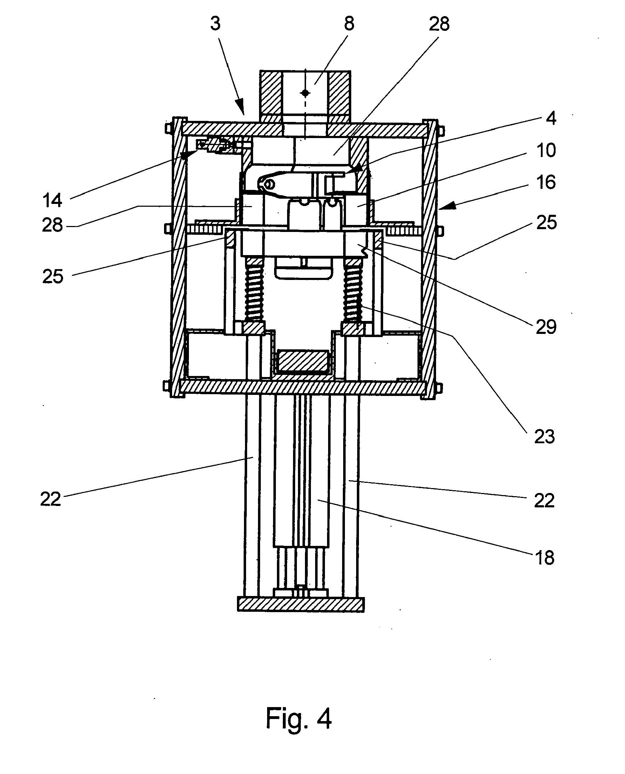

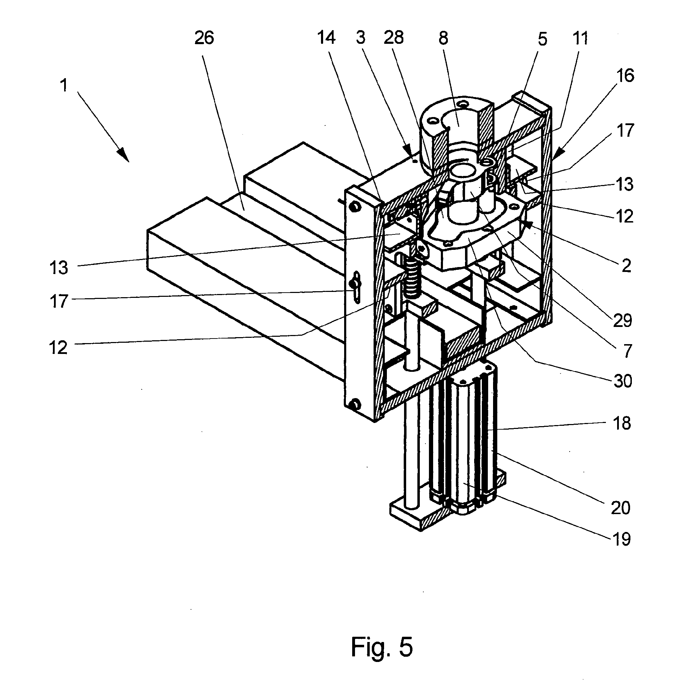

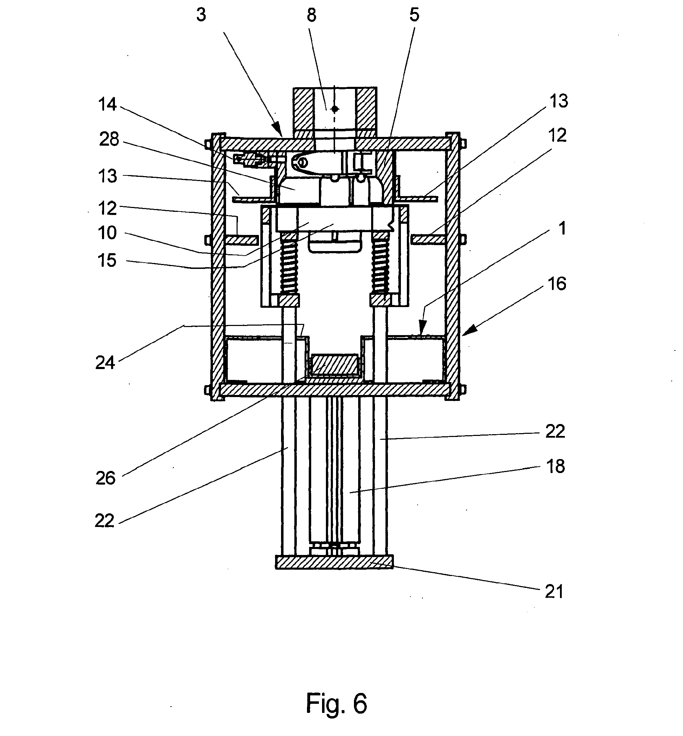

Die Fig. 1 und 2 zeigen eine an einer Förderbahn 1 für Werkstückträger 2 vorgesehene Vorrichtung 3 zum Absaugen von Werkstücken 4. Die Vorrichtung 3 weist einen Absaugmatrize 5 auf. Die Absaugmatrize 5 hat eine Innenkontur 6, die vergleichsweise dicht an die Außenkontur 7 der abzusaugenden Werkstücke 4 angepasst ist. Hierauf wird im Zusammenhang mit den Fig. 5 und 6 noch näher eingegangen werden. Weiterhin weist die Absaugmatrize 5 einen in ihre Innenkontur 6 einmündenden Absauganschluss 8 auf, der mit einer hier nicht näher dargestellten Absaugeinrichtung, beispielsweise einem Industriestaubsauger oder dgl. zu verbinden ist. Weiterhin umfasst die Absaugmatrize 5 einen angetrichterten Eingangsbereich 9 mit einem größeren freien Querschnitt, worauf im Zusammenhang mit den Fig. 3 und 4 noch näher eingegangen werden wird. An den Eingangsbereich 9 der Absaugmatrize 5 schließt nach unten ein Absaugkragen 10 an, der am Außenumfang 11 der Absaugmatrize 5 teleskopartig geführt ist, so dass er gegenüber der Absaugmatrize 5 nach oben verschoben werden kann, wobei er gegenüber der Absaugmatrize 5 weitgehend abgedichtet ist. Nach unten ist der Weg des Absaugkragens 10 durch Anschläge 12 begrenzt, an die Winkelstücke 13 anschlagen, welche an einen um die Absaugmatrize 5 umlaufenden Mantel 15 des Absaugkragens 10 angesetzt sind. Der Mantel 15 ist formsteif aus Blech geformt. Letztlich ist im Bereich der Innenkontur 6 der Absaugmatrize 5 noch eine Luftzuführungsdüse 14 vorgesehen, um zusätzlich zu der über den Absauganschluss 8 in die Absaugmatrize 5 eingesaugten Luft lokal Pressluft zum Reinigen des Werkstücks 7 einzuführen. An einem Rahmen 16 der Absaugvorrichtung 3 sind die Anschläge 12 über Langlöcher 17 höhenverstellbar. An dem Rahmen 16 stützt sich unterhalb der Förderbahn 1 ein Aktuator 18 ab, der über eine Betätigungsstange 19 und Führungsstangen 20 mit einem Podest 21 verbunden ist. Von dem mit dem Aktuator 18 höhenverfahrbaren Podest 21 führen Hubstangen 22 bis unter den in der Absaugvorrichtung 3 befindlichen Werkstückträger 2. Dabei sind innerhalb des Rahmens 16 auf den Hubstangen 22 Druckfedern 23 vorgesehen, die hier zwischen Auflagern 24 für den Werkstückträger 2 an den oberen Enden der Hubstangen 22 und hakenförmigen Rückhalteelementen 25 angeordnet sind, welche sich in der in den Fig. 1 und 2 dargestellten Arbeitsstellung der Absaugvorrichtung 3 an dem Rahmen 16 abstützen. Die hakenförmigen Rückhalteelemente 25 greifen bis über den Werkstückträger 2, liegen aber in der in den Fig. 1 und 2 dargestellten Betriebsstellung der Absaugvorrichtung 3 nicht an dem Werkstückträger 2 an. Diese Betriebsstellung entspricht dem Zeitpunkt, zu dem der Werkstückträger 2 mit einem abzusaugenden Werkstück 4 über die Förderbahn 1 mit einer in dieser geführten Förderkette 26 soeben in die Absaugstation 3 gefördert wurde, wobei der Werkstückträger 7 über Füße 27 gegenüber der Förderbahn 1 geführt und von Förderkette 26 durch Übertragung von Reibungskräften mitgenommen wurde, bis er in die Absaugvorrichtung 3 gelangte.

Die Fig. 3 und 4 zeigen die Absaugvorrichtung 3 mit über die Hubstange 22 soweit mit dem Aktuator 18 angehobenen Werkstückträger 2, dass das Werkstück 4 in den trichterförmig erweiterten Eingangsbereich 9 der Absaugmatrize 5 gelangt ist. Hier findet eine Vorabsaugung des Werkstücks 7 und auch des Werkstückträgers 2 von anhaftenden groben Verunreinigungen ab, die bereits durch noch vergleichsweise langsame Luftströmungen in den Absauganschluss 8 mitgerissen werden, aber auch größere freie Querschnitte benötigen, um zuverlässig abtransportiert werden zu können. Diese großen freien Querschnitte stehen als Vorabsaugspalt zwischen der Außenkontur 7 des Werkstücks 4 und dem Eingangsbereich 9 der Absaugmatrize 5 zur Verfügung. Es reicht jedoch nicht, das Werkstück 4 auf dem Werkstückträger 2 einfach nur in den Eingangsbereich 9 der Absaugmatrize 5 hineinzuhalten, um grobe Späne von dem Werkstück 4 und insbesondere auch dem Werkstückträger 2 zu entfernen. Vielmehr muss der Absaugkragen 10 bereits dann, wenn sich das Werkstück 4 noch in dem erweiterten Eingangsbereich 9 der Absaugmatrize 5 befindet, einen das Werkstück 4 umschließenden Absaugraum 28 so weitgehend schließen, dass nur noch durch wenige gezielt angeordnete Luftzuführungsöffnungen Luft aus der Umgebung über den Absaugraum 28 in den Absauganschluss 8 abgesaugt werden kann. Nur bei diesem begrenzten freien Querschnitt der Luftzuführungsöffnungen ist die Strömungsgeschwindigkeit der derart in den Absaugraum 28 einströmenden Luft ausreichend groß, um beispielsweise in der in den Fig. 3 und 4 dargestellten Lage des Werkstücks 4 in dem Eingangsbereich 9 der Absaugmatrize 5 grobe Späne wie erwünscht von dem Werkstückträger 2 und dem Werkstück 4abzusaugen. Dabei zeigen die Fig. 3 und 4 noch nicht ganz die Betriebsstellung, in der der Absaugraum 28 bis auf die Luftzuführungsöffnungen verschlossen ist. Diese ist erst dann genau erreicht, wenn die Rückhalteelemente 25, die sich unter der Einwirkung der Druckfedern 23, die bei den ausgefahrenen Druckstangen 22 nicht mehr über den Rahmen 16 abgestützt werden, oben an eine Grundplatte 29 des Werkstückträgers 2 angelegt haben, von unten an den Absaugkragen 10 anschlagen, so dass ein minimaler Abstand des Absaugkragens 10 zu der Grundplatte 29 erreicht ist. Bei diesem minimalen Abstand verbleibt in vertikaler Richtung ein Luftzuführungsspalt zwischen der Grundplatte 29 und dem Absaugkragen 10 von der Höhe der Erstreckung der Rückhalteelemente 25 oberhalb der Grundplatte 29. Bei den etwa gleichen horizontalen Außenmaßen der Grundplatte 29 und des Absaugkragens 28 wird durch den Luftzuführungsspalt eine Luftdüse ausgebildet, die einen Luftstrom flach über die Oberfläche 30 der Grundplatte 29 richtet. Diese Luftströmung nimmt auf der Grundplatte 29 liegende grobe Späne leicht auf und führt sie durch den noch breiten Vorabsaugspalt zwischen der Außenkontur des Werkstücks 4 und dem Eingangsbereich 9 der Absaugmatrize 5.

Wenn alle groben Späne auf diese Weise von dem Werkstückträger 22 und dem Werkstück 4 abgesaugt sind, wird der Werkstückträger 4 mit den Hubstangen 22 weiter in die in den Fig. 5 und 6 dargestellte Position angehoben. In dieser Position befindet sich das Werkstück 4 im Bereich der Innenkontur 6 der Absaugmatrize 5, wobei zwischen der Außenkontur 7 des Werkstücks 4 und der Innenkontur 6 nur noch ein schmaler Absaugspalt verbleibt, um beim Absaugen über den Absauganschluss 8 einen Luftströmung mit hoher Geschwindigkeit über die Oberfläche des Werkstücks 4 hinweg hervorzurufen, die sämtliche auch fester anhaftenden Verunreinigung mitreißt. Dieser enge Absaugspalt stellt kein Problem in Bezug auf anfallende gröbere Verunreinigungen dar, da diese bereits vorher in der Betriebstellung gemäß den Fig. 3 und 4 abgesaugt worden sind. In der Betriebsstellung gemäß den Fig. 5 und 6 ist der Absaugkragen 10 funktionslos geworden. Er hat sich außen ganz über die Absaugmatrize hochgeschoben. Die dem Absaugraum 28 verbleibende Luftzuführungsspalte werden zwar weiter durch die Rückhalteelemente 25, jetzt aber direkt zwischen der Grundplatte 29 und der Absaugmatrize 5 definiert. Wenn die Reinigung des Werkstücks 4 durch Absaugen abgeschlossen ist, wird der Aktuator 18 in der Gegenrichtung betätigt, so dass er die Hubstangen 22 wieder absenkt. Dabei stellen die Rückhalteelemente 25 sicher, dass sich die Grundplatte 29 trotz des Unterdrucks in dem Absaugraum 28 wieder von der Absaugmatrize 5 und auch dem Absaugkragen 20 ablöst, indem die Druckfedern 23 die Abstützplatte 29 über die Rückhalteelemente 25 elastisch an die Auflager 24 andrücken. Beim wieder Absetzen des Werkstückträgers 2 auf die Förderbahn 1 in die Betriebsstellung gemäß den Fig. 1 und 2 stützen sich die Druckfedern 23 wieder über die Abstützelemente 25 an dem Rahmen 16 ab, so dass der Werkstückträger 2 wieder freigegeben ist, d. h. nicht mehr von den Rückhalteelementen 25 auf die Auflager 24 gedrückt wird. Nach dem Reinigen des Werkstücks 4 und dem Wiederaufsetzen des zugehörigen Werkstücktträgers 2 auf die Förderbahn 1 kann die Förderkette 26 den Werkstückträgern 2 mit dem gereinigten Werkstück 4 zu weiteren Bearbeitungsstationen abtransportieren und einen neuen Werkstückträger 2 mit einem zu reinigenden Werkstück 4 in die Absaugvorrichtung 3 bringen.

Die Absaugvorrichtung 3, die nicht nur das Werkstück 4 selbst sondern auch den zugehörigen Werkstückträger 2 reinigt, kann bei direkter Anordnung hinter einer Bearbeitungsstation, in der das Werkstück 4 beispielsweise spanabnehmend unter Verwendung von Kühl- und Schmiermitteln bearbeitet worden ist, das Verschleppen von Spänen und Kühl- und Schmiermittelrückständen in den weiteren Verlauf der Bearbeitung der Werkstücke, insbesondere entlang der Förderbahn 1 verhindern. Gerade die unkontrollierte Verteilung von Schmiermitteln stellt auch ein nicht unerhebliches Gefahrenpotential in Fabrikationsstätten dar.

### BEZUGSZEICHENLISTE

- 1: Förderbahn
- 2: Werkstückträger
- 3: Absaugvorrichtung
- 4: Werkstück
- 5: Absaugmatrize
- 6: Innenkontur
- 7: Außenkontur
- 8: Absauganschluss
- 9: Eingangsbereich
- 10: Absaugkragen

- 11: Außenumfang
- 12: Anschlag
- 13: Winkelstück
- 14: Lufteinblasdüse
- 15: Mantel
- 16: Rahmen
- 17: Langloch
- 18: Aktuator
- 19: Schubstange
- 20: Führungsstange

- 21: Podest
- 22: Hubstange
- 23: Druckfeder
- 24: Auflager
- 25: Rückhalteelement
- 26: Förderkette
- 27: Fuß
- 28: Absaugraum
- 29: Grundplatte
- 30: Oberfläche

## Patentansprüche

1. Vorrichtung zum Absaugen von Werkstücken mit einer Außenkontur, wobei die Vorrichtung aufweist:
- eine Absaugmatrize mit einer Innenkontur, die so an die Außenkontur der Werkstücke angepasst ist, dass bei einem im Bereich der Innenkontur der Absaugmatrize angeordneten Werkstück ein Absaugspalt zwischen der Innenkontur der Absaugmatrize und der Außenkontur des Werkstücks verbleibt, und mit einem in ihre Innenkontur einmündenden Absauganschluss zum Absaugen aus dem Absaugspalt und
- einen Aktuator zum Annähern eines Werkstückträger an die Absaugmatrize, bis ein auf dem Werkstückträger gelagertes Werkstück in der Absaugmatrize angeordnet ist, und zum wieder Entfernen des Werkstückträgers mit dem Werkstück von der Absaugmatrize, wobei ein Absaugraum um das Werkstück beim Annähern des Werkstückträgers an die Absaugmatrize bis auf den Absauganschluss und definiert begrenzte Luftzuführungsöffnungen geschlossen wird,
**dadurch gekennzeichnet, dass** ein gegenüber der Absaugmatrize (5) beweglicher Absaugkragen (10) vorgesehen ist, der den Absaugraum (28) bis auf den Absauganschluss (8) und begrenzte Luftzuführungsöffnungen verschließt, bevor das Werkstück (4) in den Bereich der Innenkontur (6) der Absaugmatrize (5) eintritt, und der sich beim weiteren Annähern des Werkstückträgers (2) an die Absaugmatrize (5) gegenüber der Absaugmatrize (5) bewegt.

2. Vorrichtung nach Anspruch 1, **dadurch gekennzeichnet, dass** der Absaugkragen (10) den Absaugraum (28) bis auf den Absauganschluss (8) und begrenzte Luftzuführungsöffnungen verschlossen hat, wenn das Werkstück (4) in einen angetrichterten Eingangsbereich (9) der Absaugmatrize (5) eingetreten ist, in dem zwischen dem Werkstück (4) und der Absaugmatrize (5) ein Vorabsauspalt verbleibt, der mindestens doppelt so weit ist, wie der minimale Absaugspalt zwischen der Innenkontur (6) der Absaugmatrize (5) und der Außenkontur (7) des Werkstücks (4).

3. Vorrichtung nach Anspruch 1 oder 2, **dadurch gekennzeichnet, dass** der Absaugkragen (10) durch einen Mantel (15) ausgebildet ist, der um die Annäherungsrichtung des Werkstückträgers (2) an die Absaugmatrize (5) umläuft.

4. Vorrichtung nach einem der Ansprüche 1 bis 3, **dadurch gekennzeichnet, dass** der Absaugkragen (10) formsteif und in der Annäherungsrichtung des Werkstückträgers (2) an die Absaugmatrize (5) gegenüber der Absaugmatrize (5) verschieblich gelagert ist.

5. Vorrichtung nach einem der Ansprüche 1 bis 5, **dadurch gekennzeichnet, dass** der Absaugkragen (10) beim Annähern des Werkstückträgers (2) an die Absaugmatrize (5) von dem Werkstückträger (2) mitgenommen wird.

6. Vorrichtung einem der Ansprüche 1 bis 5, **dadurch gekennzeichnet, dass** der Absaugkragen (10) Durchbrechungen aufweist, um Luftzuführungsöffnungen auszubilden..

7. Vorrichtung einem der Ansprüche 1 bis 6, **dadurch gekennzeichnet, dass** bei bis auf den Absauganschluss (8) und begrenzte Luftzuführungsöffnungen verschlossenem Absaugraum (28) in der Annäherungsrichtung des Werkstückträgers (2) an die Absaugmatrize ein Luftzuführungsspalt zwischen dem Absaugkragen (10) und der Oberfläche (30) einer Grundplatte (29) des Werkstückträgers (2) verbleibt.

8. Vorrichtung einem der Ansprüche 1 bis 7, **dadurch gekennzeichnet, dass** der Aktuator (18) den Werkstückträger (2) zum Einführen des Werkstücks (4) in die Absaugmatrize gegenüber einer Förderbahn (1) für Werkstückträger (2) vertikal anhebt und zum wieder Entfernen des Werkstückträgers (2) mit dem Werkstück (4) von der Absaugmatrize (5) vertikal bis auf die Förderbahn (1) absenkt.

9. Vorrichtung nach Anspruch 8, **dadurch gekennzeichnet, dass** Druckfedern (23) vorgesehen sind, um den Werkstückträger (2) nach dem Anheben des Werkstückträgers (2) von der Förderbahn (1) durch elastische Kräfte auf ein Auflager (24) an dem Aktuator (18) vorzuspannen.

10. Vorrichtung nach Anspruch 9, **dadurch gekennzeichnet, dass** sich die Druckfedern (23) beim wieder Absenken des Werkstückträgers (2) auf die Förderbahn (1) so ortsfest abstützen, dass der Werkstückträger (2) von den elastischen Kräften wieder frei wird.
